# EUROPEAN PATENT APPLICATION

(11) **EP 4 817 960 A1**
(43) Date of publication of application: **07.10.2026**
(21) Application number: 24896285.4
(22) Date of filing: 14.11.2024
(51) Int. Cl.: B60R 16/023, B60T 17/22, G06F 11/00

(54) **PARKING METHOD, VEHICLE, AND STORAGE MEDIUM**

(30) Priority: 27.11.2023 CN 202311595648
(71) Applicant: Great Wall Motor Company Limited, Baoding, Hebei 071000 (CN)
(72) Inventor: ZHANG, Shizhao, Baoding, Hebei 071000 (CN); YANG, Rui, Baoding, Hebei 071000 (CN); GAO, Mengqiao, Baoding, Hebei 071000 (CN); ZHAO, Jingwei, Baoding, Hebei 071000 (CN); WANG, Dongxu, Baoding, Hebei 071000 (CN); LIU, Zhihan, Baoding, Hebei 071000 (CN)
(74) Representative: Klunker IP Patentanwälte PartG mbB
(86) International application number: PCT/CN2024/132078
(87) International publication number: WO 2025/113194

(57) **Abstract**

The present disclosure provides a method for parking a vehicle, a vehicle, and a storage medium. The method is applied to the technical field of vehicle braking. The method includes: receiving a first upgrade instruction transmitted by a communication device, where the first upgrade instruction has a first data packet; detecting whether the vehicle satisfies a first predetermined upgrade condition; and in response to detecting that the vehicle satisfies the first predetermined upgrade condition, updating a parking strategy of any one of the parking chips based on the first data packet, and transmitting the first data packet to another one of the parking chips, to control a corresponding parking device to perform parking based on the updated parking strategy.

## Description

### CROSS-REFERENCE TO RELATED APPLICATION

This application is based on and claims priority to Chinese Patent Application No. 202311595648.3, filed on November 27, 2023, the entire contents of which are incorporated herein by reference.

### FIELD

The present disclosure relates to the technical field of vehicle braking, and in particular, to a method for parking a vehicle, a vehicle, and a storage medium.

### BACKGROUND

In the related art, the electronic parking system, also referred to as Electronic Park Brake (EPB), is adopted to overcome the shortcomings of the conventional mechanical parking brake system, offering greater precision and control performance. The parking system typically consists of a plurality of components, such as a sensor, a control unit, and an actuator. These components rely on chips for data calculation and instruction control. Updating the parking system chip can resolve an existing problem, improve reliability and compatibility of the system, and introduce new functions and features.

However, in the related art, update data is required to be transmitted to the parking chip to complete the update. For a parking system with a redundant parking structure, accurately transmitting the update data to the parking chip requires the deployment of a redundant communication line, which makes the wiring configuration within the parking system rather complex. Moreover, a fault the corresponding line directly leads to an update failure. Meanwhile, in the related art, optimal parking strategy matching is mostly performed based on a corresponding parking condition to achieve targeted data update of the parking chip. However, this approach lacks the ability to assess a vehicle state, which tends to result in failed data update or data update occurring at an abnormal time period, which affects the parking effect. This situation calls for urgent improvement.

### SUMMARY

The present disclosure provides a method for parking a vehicle, a vehicle, and a storage medium. The method may be applied to a redundant control parking system, and is capable of updating a parking strategy of one of parking chips when the vehicle satisfies an upgrade condition, to prevent erroneous update from affecting a normal parking function of the vehicle. Moreover, update data is transmitted to the other parking chip through forwarding between the parking chips, without requiring a complicated wiring structure. In this way, parking performance of the vehicle is enhanced, and driving safety and fuel economy are improved.

In a first aspect, a method for parking a vehicle is provided. The vehicle includes: a first parking device and a second parking device that are respectively disposed corresponding to front wheels and rear wheels; or a first parking device disposed corresponding to one of the front wheels and one of the rear wheels of the vehicle, and a second parking device disposed corresponding to another one of the front wheels and another one of the rear wheels of the vehicle; a first control assembly configured to drive the first parking device to operate and including a first parking chip; a second control assembly configured to drive the second parking device to operate and including a second parking chip, where the first parking chip and the second parking chip communicate with each other; and a communication device in communication with the first control assembly or the second control assembly. The method includes: receiving a first upgrade instruction transmitted by the communication device, where the first upgrade instruction has a first data packet; detecting whether the vehicle satisfies a first predetermined upgrade condition; and in response to detecting that the vehicle satisfies the first predetermined upgrade condition, updating a parking strategy of a present parking chip to which the method is applied based on the first data packet, and transmitting the first data packet to another one of the first parking chip and the second parking chip, to control a corresponding parking device among the first parking device and the second parking device to perform parking based on the updated parking strategy.

Through the above technical solution, the method may be applied to the redundant control parking system, and is capable of updating the parking strategy of the present parking chip when the vehicle satisfies the upgrade condition, to prevent the erroneous update from affecting the normal parking function of the vehicle. Moreover, the update data is transmitted to the other parking chip through forwarding between the parking chips, without requiring the complicated wiring structure. In this way, the parking performance of the vehicle is enhanced, and the driving safety and the fuel economy are improved.

In conjunction with the first aspect, in some possible implementations, the method further includes: receiving a second upgrade instruction transmitted by a server, in which the second upgrade instruction has a second data packet; detecting whether the vehicle satisfies a second predetermined upgrade condition; and in response to detecting that the vehicle satisfies the second predetermined upgrade condition, updating the parking strategy of the present parking chip based on the second data packet, and transmitting the second data packet to the other one of the first parking chip and the second parking chip.

Through the above technical solution, besides receiving the upgrade instruction transmitted by the communication device, the upgrade instruction transmitted by the server can also be received, thereby avoiding an update failure caused by a fault of the communication device and diversifying sources of the update data.

In conjunction with the first aspect, in some possible implementations, the detecting whether the vehicle satisfies the second predetermined upgrade condition includes: determining whether the vehicle is in a driving state; determining whether a channel occupation state of the vehicle satisfies an upgrade requirement; determining whether internal communication of the vehicle is normal; and determining whether a parking structure of the vehicle is faulty.

Through the above technical solution, the upgrade condition can be determined based on the driving state of the vehicle, channel occupation, an internal communication state, and a parking mechanism, to avoid an upgrade fault.

In conjunction with the first aspect, in some possible implementations, the method further includes, prior to the receiving the first upgrade instruction transmitted by the communication device: obtaining a current location and/or a current environment of the vehicle; determining whether a latest parking strategy corresponding to the current location and/or the current environment is the parking strategy; and in response to determining that the latest parking strategy corresponding to the current location and/or the current environment is not the parking strategy, providing an update prompt to a user or transmitting the update prompt to a predetermined terminal, to recommend the latest parking strategy to the user.

Through the above technical solution, it can be determined whether parking strategy update is required based on the current location and/or the current environment of the vehicle. Moreover, the user can be prompted or recommended with the latest parking strategy when the update is required. In this way, the parking strategy can always satisfy a current requirement of the vehicle.

In conjunction with the first aspect, in some possible implementations, the method further includes, prior to the receiving the first upgrade instruction transmitted by the communication device: identifying a driving style of a current user, and determining a parking strategy matching the driving style; and recommending a corresponding upgrade package based on the parking strategy matching the driving style and the parking strategy to the current user. The first upgrade instruction is obtained from the upgrade package.

Through the above technical solution, driving parking preference can be determined based on the driving style of the current user, to determine a parking strategy matching the preference in a more targeted manner, thereby improving driving experience of the user.

In conjunction with the first aspect, in some possible implementations, the first upgrade instruction includes at least one of an upgrade mode, upgrade time, or an upgrade determination condition.

Through the above technical solution, it is possible to determine a corresponding upgrade mode, corresponding upgrade time, and whether current upgrade is allowable based on the upgrade instruction.

In conjunction with the first aspect, in some possible implementations, the upgrade mode includes a staged upgrade mode generated based on the first data packet and an idle time period of the vehicle.

Through the above technical solution, the staged upgrade mode can be determined based on a size of the data packet and the idle time period, to avoid affecting normal use of the vehicle.

In conjunction with the first aspect, in some possible implementations, the updating the parking strategy of the present parking chip to which the method is applied based on the first data packet includes: obtaining an actual parking type of the vehicle; determining an upgrade mode matching the actual parking type; and upgrading the parking strategy based on the first data packet according to the upgrade mode.

Through the above technical solution, the upgrade mode matching the actual parking type of the vehicle can be determined, to solve an impact of an in-vehicle parking structure on the parking strategy upgrade.

In conjunction with the first aspect, in some possible implementations, the method further includes, subsequent to the updating the parking strategy of the present parking chip to which the method is applied based on the first data packet: determining whether the parking strategy is successfully updated; and in response to determining that the parking strategy is not successfully updated, controlling the vehicle to provide a manual update prompt, or re-updating the parking strategy of the present parking chip based on the first data packet at a predetermined time interval, until the parking strategy is successfully updated.

Through the above technical solution, it can be determined whether the parking strategy is successfully updated, and the user can be notified in a timely manner for response processing, to avoid an impact of the update failure on normal parking of the vehicle.

In conjunction with the first aspect, in some possible implementations, the method further includes, prior to the receiving the first upgrade instruction transmitted by the communication device: obtaining a destination of the vehicle based on navigation information of the vehicle; determining whether the parking strategy satisfies a predetermined to-be-upgraded condition based on a parking strategy corresponding to the destination; and in response to determining that the parking strategy satisfies the predetermined to-be-upgraded condition, transmitting an upgrade request to a server.

Through the above technical solution, the parking strategy can be updated in advance based on the destination of the vehicle, to assist the vehicle in parking.

In conjunction with the first aspect, in some possible implementations, the determining whether the parking strategy satisfies the predetermined to-be-upgraded condition based on the parking strategy corresponding to the destination includes: determining whether the vehicle performs parking during travel to the destination; determining whether parking strategy update conflicts with a driving state of the vehicle; and determining whether a parking strategy update process affects other functions of the vehicle.

Through the above technical solution, it can be accurately determined whether the vehicle can be upgraded.

In conjunction with the first aspect, in some possible implementations, the method further includes, prior to the updating the parking strategy of the present parking chip to which the method is applied based on the first data packet: obtaining an update mode predetermined by a user; in response to the update mode being an automatic update mode, updating the parking strategy of the present parking chip based on the first data packet; and in response to the update mode being a manual confirmation update mode, generating an update request and pushing the update request to the user.

Through the above technical solution, the update can be performed based on the update mode predetermined by the user, so that update time and the update mode better satisfy a user requirement.

In a second aspect, an apparatus for parking a vehicle is provided. The vehicle includes: a first parking device and a second parking device that are respectively disposed corresponding to front wheels and rear wheels; or a first parking device disposed corresponding to one of the front wheels and one of the rear wheels of the vehicle, and a second parking device disposed corresponding to another one of the front wheels and another one of the rear wheels of the vehicle; a first control assembly configured to drive the first parking device to operate and including a first parking chip; a second control assembly configured to drive the second parking device to operate and including a second parking chip, where the first parking chip and the second parking chip communicate with each other; and a communication device in communication with the first control assembly or the second control assembly. The apparatus is applied to any one of the first parking chip and the second parking chip, and includes: a first receiving module configured to receive a first upgrade instruction transmitted by the communication device, where the first upgrade instruction has a first data packet; a first detection module configured to detect whether the vehicle satisfies a first predetermined upgrade condition; and a first parking module configured to, in response to detecting that the vehicle satisfies the first predetermined upgrade condition, update a parking strategy of a present parking chip to which the method is applied based on the first data packet, and transmit the first data packet to another one of the first parking chip and the second parking chip, to control a corresponding parking device among the first parking device and the second parking device to perform parking based on the updated parking strategy.

In conjunction with the second aspect, in some possible implementations, the apparatus further includes: a second receiving module configured to receive a second upgrade instruction transmitted by a server, in which the second upgrade instruction has a second data packet; a second detection module configured to detect whether the vehicle satisfies a second predetermined upgrade condition; and a second parking module configured to, in response to detecting that the vehicle satisfies the second predetermined upgrade condition, update the parking strategy of the present parking chip based on the second data packet, and transmit the second data packet to the other one of the first parking chip and the second parking chip.

In conjunction with the second aspect, in some possible implementations, the second detection module includes: a first determination unit configured to determine whether the vehicle is in a driving state; a second determination unit configured to determine whether a channel occupation state of the vehicle satisfies an upgrade requirement; a third determination unit configured to determine whether internal communication of the vehicle is normal; and a fourth determination unit configured to determine whether a parking structure of the vehicle is faulty.

In conjunction with the second aspect, in some possible implementations, the apparatus further includes: a first obtaining module configured to obtain a current location and/or a current environment of the vehicle; a first determination module configured to determine whether a latest parking strategy corresponding to the current location and/or the current environment is the parking strategy; and a first recommendation module configured to, in response to determining that the latest parking strategy corresponding to the current location and/or the current environment is not the parking strategy, provide an update prompt to a user or transmit the update prompt to a predetermined terminal, to recommend the latest parking strategy to the user.

In conjunction with the second aspect, in some possible implementations, the apparatus further includes: a matching module configured to identify a driving style of a current user, and determine a parking strategy matching the driving style; and a second recommendation module configured to recommend a corresponding upgrade package based on the parking strategy matching the driving style and the parking strategy to the current user. The first upgrade instruction is obtained from the upgrade package.

In conjunction with the second aspect, in some possible implementations, the first upgrade instruction includes at least one of an upgrade mode, upgrade time, or an upgrade determination condition.

In conjunction with the second aspect, in some possible implementations, the upgrade mode includes a staged upgrade mode generated based on the first data packet and an idle time period of the vehicle.

In conjunction with the second aspect, in some possible implementations, the first parking module includes: an obtaining unit configured to obtain an actual parking type of the vehicle; a matching unit configured to determine an upgrade mode matching the actual parking type; and an upgrade unit configured to upgrade the parking strategy based on the first data packet according to the upgrade mode.

In conjunction with the second aspect, in some possible implementations, the apparatus further includes: a second determination module configured to determine whether the parking strategy is successfully updated; and an update module configured to, in response to determining that the parking strategy is not successfully updated, control the vehicle to provide a manual update prompt, or re-update the parking strategy of the present parking chip based on the first data packet at a predetermined time interval, until the parking strategy is successfully updated.

In conjunction with the second aspect, in some possible implementations, the apparatus further includes: a second obtaining module configured to obtain a destination of the vehicle based on navigation information of the vehicle; a third determination module configured to determine whether the parking strategy satisfies a predetermined to-be-upgraded condition based on a parking strategy corresponding to the destination; and a transmitting module configured to, in response to determining that the parking strategy satisfies the predetermined to-be-upgraded condition, transmit an upgrade request to a server.

In conjunction with the second aspect, in some possible implementations, the third determination module includes: a fifth determination unit configured to determine whether the vehicle performs parking during travel to the destination; a sixth determination unit configured to determine whether parking strategy update conflicts with a driving state of the vehicle; and a seventh determination unit configured to determine whether a parking strategy update process affects other functions of the vehicle.

In conjunction with the second aspect, in some possible implementations, the apparatus further includes: a third obtaining module configured to obtain an update mode predetermined by a user; an automatic update module configured to, in response to the update mode being an automatic update mode, update the parking strategy of the present parking chip based on the first data packet; and a manual update module configured to, in response to the update mode being a manual confirmation update mode, generate an update request and push the update request to the user.

In a third aspect, a vehicle is provided. The vehicle includes: a memory; a processor; and a computer program stored in the memory and executable on the processor. The processor executes the program to implement the method for parking the vehicle as described in the above embodiments.

In a fourth aspect, a computer-readable storage medium is provided. The computer-readable storage medium stores a computer program code. The computer program code, when running on a computer, causes the computer to execute the method for parking the vehicle in the first aspect or any one of the possible implementations of the first aspect.

Additional aspects and advantages of the present disclosure will be partially set forth in the following description, and partially will become apparent from the following description, or will be learned through practice of the present disclosure.

### BRIEF DESCRIPTION OF THE DRAWINGS

The above and/or additional aspects and advantages of the present disclosure will become apparent and readily understandable from the following description of embodiments taken in conjunction with the accompanying drawings, in which:
FIG. 1a is a schematic diagram of a system architecture of a method for parking a vehicle according to an embodiment of the present disclosure;
FIG. 1b is a schematic diagram of a system architecture of a method for parking a vehicle according to another embodiment of the present disclosure;
FIG. 2 is a schematic diagram of a system architecture of a method for parking a vehicle according to yet another embodiment of the present disclosure;
FIG. 3 is a schematic diagram of a system architecture of a method for parking a vehicle according to still yet another embodiment of the present disclosure;
FIG. 4 is a flowchart of a method for parking a vehicle according to an embodiment of the present disclosure;
FIG. 5 is a schematic diagram of a driving preference analysis principle according to an embodiment of the present disclosure;
FIG. 6 is a schematic diagram of a parking force analysis principle for a low-adhesion road surface according to an embodiment of the present disclosure;
FIG. 7a is a first schematic structural diagram of an apparatus for parking a vehicle according to an embodiment of the present disclosure;
FIG. 7b is a second schematic structural diagram of an apparatus for parking a vehicle according to an embodiment of the present disclosure;
FIG. 7c is a third schematic structural diagram of an apparatus for parking a vehicle according to an embodiment of the present disclosure;
FIG. 7d is a fourth schematic structural diagram of an apparatus for parking a vehicle according to an embodiment of the present disclosure;
FIG. 7e is a fifth schematic structural diagram of an apparatus for parking a vehicle according to an embodiment of the present disclosure;
FIG. 7f is a sixth schematic structural diagram of an apparatus for parking a vehicle according to an embodiment of the present disclosure;
FIG. 7g is a seventh schematic structural diagram of an apparatus for parking a vehicle according to an embodiment of the present disclosure;
FIG. 7h is an eighth schematic structural diagram of an apparatus for parking a vehicle according to an embodiment of the present disclosure;
FIG. 7i is a ninth schematic structural diagram of an apparatus for parking a vehicle according to an embodiment of the present disclosure;
FIG. 7j is a tenth schematic structural diagram of an apparatus for parking a vehicle according to an embodiment of the present disclosure; and
FIG. 8 is a schematic structural diagram of a vehicle according to an embodiment of the present disclosure.

### DETAILED DESCRIPTION

The technical solutions in the present disclosure will be described clearly and in detail below with reference to the accompanying drawings. In the description of the embodiments of the present disclosure, unless otherwise specified, "/" means "or". For example, A/B may represent A or B. The term "and/or" in the text only represents a relationship between correlated objects, including three relationships. For example, "A and/or B" may mean three situations: A only, B only, or both A and B. In addition, in the description of the embodiments of the present disclosure, "a plurality of" refers to two or more than two.

Hereinafter, terms such as "first" and "second" are used for purposes of description and are not intended to indicate or imply relative importance, or to implicitly show the number of indicated technical features. Thus, the feature associated with "first" and "second" may include one or more this feature distinctly or implicitly.

A conventional parking brake system takes the form of a mechanical parking brake handle, which may be connected to a parking brake through a lever and a cable to lock a transmission shaft or a rear wheel for braking. When a user needs to park a vehicle, the user may manually pull up the parking brake handle to bring a brake plate into contact with a wheel and prevent the vehicle from moving forward. This operation is cumbersome and laborious, and is significantly affected by terrain. For example, uneven terrain may result in a poor braking effect. Moreover, during high-speed driving, the user must reduce a vehicle speed before operating the parking brake, which poses a large accident risk. In addition, as the operation of the mechanical parking brake requires user intervention, which is incompatible with autonomous driving technologies, imposing certain limitations on the future development of automobiles.

Based on improvement to the conventional parking brake system, in the related art, electronic parking braking can be implemented through an Electrical Park Brake (EPB) with higher precision and control performance, thereby reducing the user intervention, weakening an impact of a terrain factor on the braking effect, improving parking brake safety, and providing an auxiliary foundation for autonomous driving technologies in terms of braking and parking. However, EPB relies on a parking mechanism to decelerate the vehicle and control parking. Failure of a main line of the parking mechanism often leads to a parking brake failure, causing a major safety accident, making it difficult to ensure the parking brake safety, and being unfavorable for improving user's driving experience.

Meanwhile, a parking chip, as a control center of the parking system, needs to be updated in time to enhance parking performance of the vehicle, improve driving safety and fuel economy, fix security vulnerability, and enhance function scalability. However, in the related art, update data is required to be transmitted to the parking chip to complete the update. For a parking system with a redundant parking structure, accurately transmitting the update data to the parking chip requires the deployment of a redundant communication line, which makes the wiring configuration within the parking system rather complex. Moreover, a fault occurring in the corresponding line directly leads to an update failure. Meanwhile, in the related art, optimal parking strategy matching is mostly performed based on a corresponding parking condition to achieve targeted data update of the parking chip. However, this approach lacks the ability to assess a vehicle state, which tends to result in failed data update or data update occurring at an abnormal time period, thereby affecting a parking effect.

Before explaining a method for parking the vehicle provided according to the embodiments of the present disclosure, a system architecture involved in the embodiments of the present disclosure will first be described.

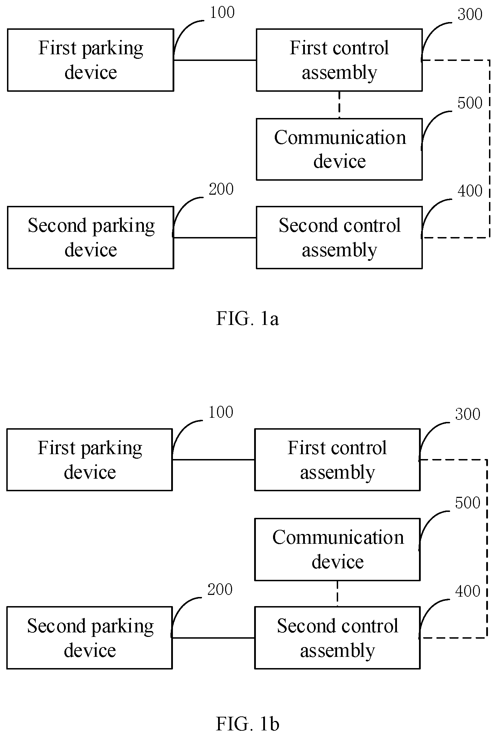

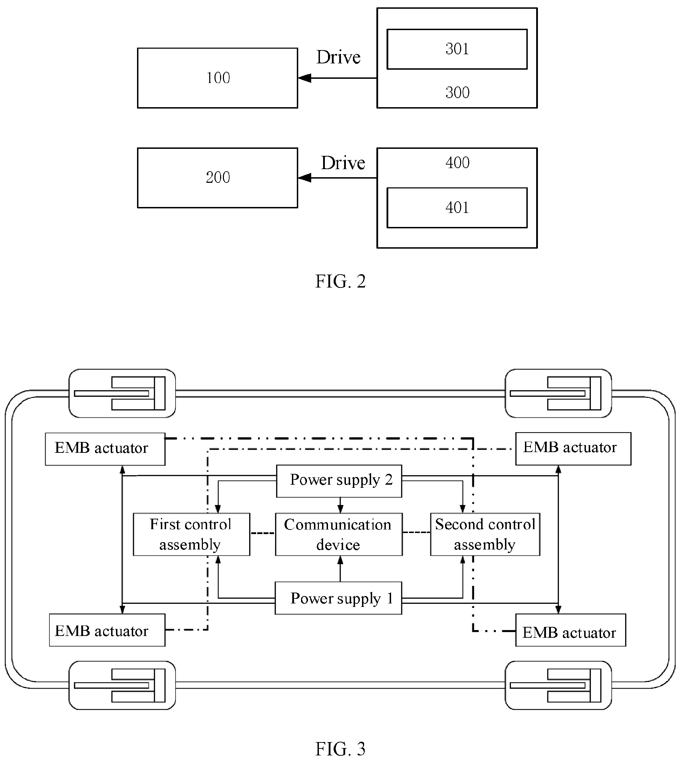

Next, an applicable scenario or the system architecture of the embodiments of the present disclosure will be described with reference to FIG. 1a, FIG. 1b, and FIG. 2.

As shown in FIG. 1a, FIG. 1b, and FIG. 2, the system architecture of the embodiments of the present disclosure may include: a first parking device 100, a second parking device 200, a first control assembly 300, a second control assembly 400, and a communication device 500.

The first parking device 100 and the second parking device 200 are disposed corresponding to front wheels and rear wheels, respectively.

Alternatively, the first parking device 100 is disposed corresponding to one of front wheels and one of rear wheels of the vehicle, and the second parking device 200 is disposed corresponding to another one of the front wheels and another one of the rear wheels of the vehicle.

Each parking device controls the wheel by driving a corresponding parking mechanism. Each parking mechanism is disposed corresponding to one wheel of the vehicle. A correspondence between the parking devices and the wheels may have three types: Type 2, Type II, and Type X.

For example, a structure of Type 2 is described below.

The first parking device 100 is disposed corresponding to two front wheels of the vehicle, and the second parking device 200 is disposed corresponding to two rear wheels of the vehicle.

Alternatively, the first parking device 100 is disposed corresponding to two rear wheels of the vehicle, and the second parking device 200 is disposed corresponding to two front wheels of the vehicle.

Type-2 parking control of the vehicle is realized based on the above structure of Type 2.

A structure of Type II is described below.

The first parking device 100 is disposed corresponding to a left front wheel and a left rear wheel of the vehicle, and the second parking device 200 is disposed corresponding to a right front wheel and a right rear wheel of the vehicle.

Alternatively, the first parking device 100 is disposed corresponding to the right front wheel and the right rear wheel of the vehicle, and the second parking device 200 is disposed corresponding to the left front wheel and the left rear wheel of the vehicle.

Type-II parking control of the vehicle is realized based on the above structure of Type II.

A structure of Type X is described below.

The first parking device 100 is disposed corresponding to the left front wheel and the right rear wheel of the vehicle, and the second parking device 200 is disposed corresponding to the right front wheel and the left rear wheel of the vehicle.

Alternatively, the first parking device 100 is disposed corresponding to the right front wheel and the left rear wheel of the vehicle, and the second parking device 200 is disposed corresponding to the left front wheel and the right rear wheel of the vehicle.

Type-X parking control of the vehicle is realized based on the above structure pf Type X.

In addition, the first control assembly 300 includes a first parking chip 301.

The second control assembly 400 includes a second parking chip 401.

The first control assembly 300 drives the first parking device 100.

The second control assembly 400 drives the second parking device 200.

On this basis, the first parking chip 301 and the second parking chip 401 may determine a parking strategy matching the correspondence between the parking devices and the wheels, to ensure stability of vehicle parking.

It should be noted that the first control assembly 300 and the second control assembly 400 are not constituted by only the first parking chip 301 and the second parking chip 401, respectively. The first control assembly 300 and the second control assembly 400 may further include their respective actuators, respective drive units, and other respective structures, to realize parking through coordinated operation.

The communication device 500 may communicate with the first control assembly 300 or the second control assembly 400. After the communication device 500 transmits a parking signal to any one of the first control assembly 300 and the second control assembly 400, which forwards the parking signal to another one of the first control assembly 300 and the second control assembly 400, to realize transmission of the parking signal. The first control assembly 300 and the second control assembly 400 may communicate with each other. The first parking chip 301 and the second parking chip 401 may communicate with each other.

In an embodiment of the present disclosure, as shown in FIG. 3, the first control assembly 300 and the second control assembly 400 may be a front controller and a rear controller, respectively, to control a corresponding parking mechanism, such as an Electromechanical Brake System (EMB) actuator, based on the corresponding arrangement relationship between the first parking device 100 or the second parking device 200 and the wheels.

The communication device 500 receives a signal from each of the first control assembly 300 and the second control assembly 400 for redundancy, ensuring that even if the first control assembly 300 and the second control assembly 400 fail, the communication device 500 can still transmit an instruction to the parking mechanisms of the four wheels through the parking chip.

Power supplies supply power to the four parking mechanisms, the first control assembly 300, and the second control assembly 400. One of the power supplies is a redundant power supply to prevent an electronic parking system from failing to operate due to the failure of a certain power supply.

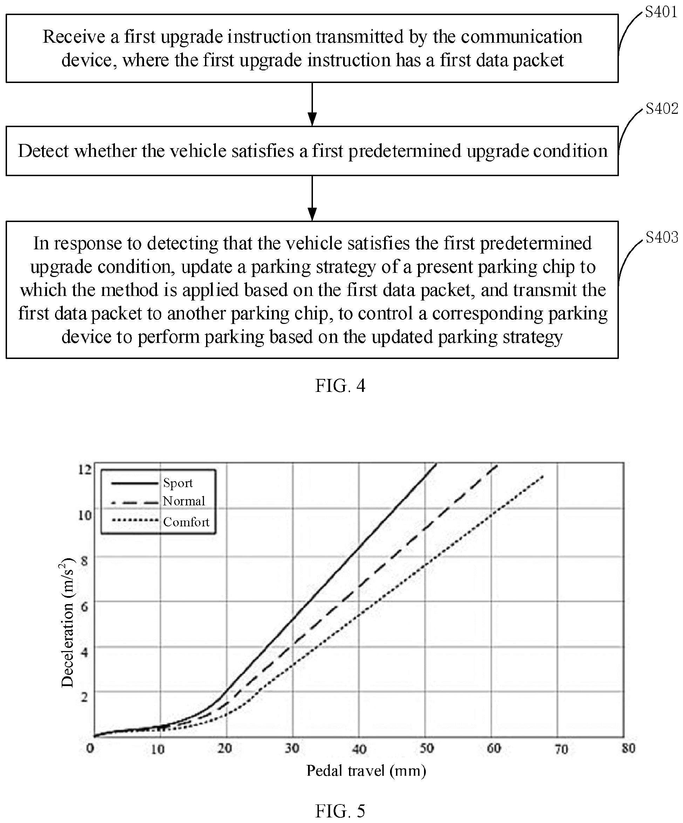

FIG. 4 is a schematic flowchart of a method for parking a vehicle according to an embodiment of the present disclosure.

Exemplarily, as shown in FIG. 4, the method includes following steps S401 to S403.

At step S401, a first upgrade instruction transmitted by the communication device is received. The first upgrade instruction has a first data packet.

Optionally, in an embodiment of the present disclosure, the first upgrade instruction includes at least one of an upgrade mode, upgrade time, or an upgrade determination condition.

Optionally, in an embodiment of the present disclosure, the upgrade mode includes a staged upgrade mode generated based on the first data packet and an idle time period of the vehicle.

In actual implementation, any one parking chip in the embodiment of the present disclosure may receive the first upgrade instruction having the first data packet transmitted by the communication device. The first data packet may store the update data of the parking strategy. The first upgrade instruction may include information such as an upgrade mode, upgrade time, and an upgrade determination condition. For example, when an idle time period of a vehicle system or a function application is short, the upgrade mode may be staged upgrade, i.e., a part is upgraded in each idle time period to reduce an impact on the use of other functions of the vehicle. When it is determined, based on a historical driving record of the vehicle, that the vehicle has a long idle time period after a fixed time period every day, this time period may be set as the upgrade time.

The communication device in the embodiment of the present disclosure may receive an update request from the parking chip, then download the corresponding first data packet from a server, such as an automobile enterprise client or a cloud, based on the update request, and generate a corresponding first upgrade instruction based on the first data packet, to update the parking strategy of the parking chip.

Optionally, in an embodiment of the present disclosure, the method further includes, prior to the receiving the first upgrade instruction transmitted by the communication device: identifying a driving style of a current user, and determining a parking strategy matching the driving style; and recommending a corresponding upgrade package based on the parking strategy matching the driving style and the parking strategy to the current user. The first upgrade instruction is obtained from the upgrade package.

In some embodiments, before the first upgrade instruction transmitted by the communication device is received, the user's driving style may be identified based on historical vehicle data in the embodiment of the present disclosure. The historical vehicle data may include historical driving data, historical parking data, and the like of the vehicle. The driving style may include an aggressive driving style, a smooth driving style, and the like. Then, a parking strategy matching the driving style is determined.

For example, as shown in FIG. 5, in the embodiment of the present disclosure, parking preference of a driver may be determined based on time taken for brake pedal travel to reach full travel. The time for the brake pedal travel to reach the full travel being greater than 0.7s indicates aggressive driving preference. The time smaller than 0.7s indicates comfortable and stable driving preference. Comfort represents deceleration corresponding to slow and comfortable parking pedal travel, and Sport represents deceleration corresponding to rapid braking pedal travel.

For example, in the embodiments of the present disclosure, it is possible to obtain a parking parameter manually adjusted by the driver during each parking, identify a frequency and a wavelength of the parking signal, and determine the parking preference of the driver, to determine a latest parking strategy, making a parking action more in line with the driver's preference.

A relationship between the frequency and the wavelength of the parking signal and the parking preference may be shown in Table 1, which is a relationship table between the frequency and the wavelength of the parking signal and the parking preference.

**Table 1**

| Parking preference | Parking signal frequency | Parking signal wavelength |
|---|---|---|
| Aggressive preference | <1.5s⁻¹ | ≥40ms |
| Smooth preference | ≥1.5s⁻¹ | <40ms |

Optimal parking strategies vary with different driving preferences. In the embodiment of the present disclosure, a parking response moment, a parking mechanism response speed, and a corresponding parking force may be calculated based on the driving preference. For example, under the aggressive preference, the parking signal is transmitted quickly and sensitively, and the corresponding parking force is large. When the parking chip identifies that the wavelength of the parking signal is smaller than or equal to a predetermined threshold, the parking chip determines a false touch by default.

When the driver has the smooth preference, the wavelength of the parking signal is relatively small, and the frequency of the parking signal is relatively high. When the parking chip identifies that the wavelength of the parking signal is greater than the predetermined threshold, the parking chip determines a false touch by default.

Through the above technical solution, in the embodiment of the present disclosure, the parking preference of driving can be determined based on the driving style of the current user, to determine the matched parking strategy in a more targeted manner, thereby improving the user's driving experience.

Optionally, in an embodiment of the present disclosure, the method further includes, prior to the receiving the first upgrade instruction transmitted by the communication device: obtaining a destination of the vehicle based on navigation information of the vehicle; determining whether the parking strategy satisfies a predetermined to-be-upgraded condition based on a parking strategy corresponding to the destination; and in response to determining that the parking strategy satisfies the predetermined to-be-upgraded condition, transmitting an upgrade request to a server.

In other embodiments, before the first upgrade instruction transmitted by the communication device is received, the destination of the vehicle may be further obtained based on the navigation information of the vehicle in the embodiment of the present disclosure. Then, corresponding information of the destination, such as current weather, climate, or altitude of the destination, is obtained, to obtain the parking strategy corresponding to the destination. For example, when the current weather of the destination is rainy and snowy, a parking force may be adjusted in the corresponding parking strategy to increase friction, thereby ensuring parking stability and safety.

Optionally, in an embodiment of the present disclosure, the determining, based on the parking strategy corresponding to the destination, whether the parking strategy satisfies the predetermined to-be-upgraded condition includes: determining whether the vehicle parks during travel to the destination; determining whether parking strategy update conflicts with a driving state of the vehicle; and determining whether a parking strategy update process affects other functions of the vehicle.

In the embodiment of the present disclosure, it may be determined whether the parking strategy satisfies the predetermined to-be-upgraded condition based on the parking strategy corresponding to the destination. The predetermined to-be-upgraded condition may include determining whether the vehicle parks during travel to the destination. For example, long-time parking midway causes the parking strategy to be unable to satisfy a condition of a midway parking location. The condition may further include determining whether the parking strategy update conflicts with the driving state of the vehicle. For example, when the current driving state of the vehicle is a long-distance high-speed driving state, hasty parking strategy update easily causes a vehicle control failure. The condition may further include determining whether the update process interferes with other functions of the vehicle. For example, excessive resource occupation during the update affects current navigation of the vehicle. The condition may further include determining whether communication is normal. For example, in the embodiment of the present disclosure, destination information may be obtained based on a driver's destination situation, such as through a Global Positioning System (GPS). For example, the destination information may include a ramp, a low-adhesion road surface, a high-adhesion road surface, a split road surface, or the like. Moreover, the parking strategy is upgraded when it is recognized that the vehicle stays at a destination exceeding a predetermined time period and a predetermined frequency. The upgrade strategy in the embodiment of the present disclosure may be tailored to a vehicle parking habit, reducing dependence of the vehicle on the user's driving experience.

For example, in the embodiment of the present disclosure, a frequent location, such as a company, a home, or a shopping mall, may be automatically set through navigation. Alternatively, the parking strategy is automatically identified by a control unit as according to the parking time.

When the parking time length exceeds 6 hours, with a frequency of about 5 to 7 times per week, and the parking time range is 18:00 to 8:00, the destination may be defaulted as home.

When the parking time length exceeds 6 hours, with a frequency of about 5 to 7 times per week, and the parking time range is 8:00 to 18:00, the destination may be defaulted as a company.

When the parking time length is smaller than or equal to 4 hours with an unfixed frequency, it may be regarded as temporary parking.

For the above three situations, in the embodiment of the present disclosure, the upgrade request may be transmitted to the server during a corresponding parking time period when the destination is the home or company.

When the parking strategy corresponding to the destination satisfies the predetermined to-be-upgraded condition, the present parking chip in the embodiment of the present disclosure may transmit the upgrade request to the server, to implement issuance of the first upgrade instruction through the communication device.

Through the above technical solution, the parking strategy can be updated in advance based on the destination of the vehicle to assist the vehicle in parking.

Optionally, in an embodiment of the present disclosure, the method further includes, prior to the receiving the first upgrade instruction transmitted by the communication device: obtaining a current location and/or a current environment of the vehicle; determining whether a latest parking strategy corresponding to the current location and/or the current environment is the parking strategy; and in response to determining that the latest parking strategy corresponding to the current location and/or the current environment is not the parking strategy, providing an update prompt to a user or transmitting the update prompt to a predetermined terminal, to recommend the latest parking strategy to the user.

In other embodiments, before the first upgrade instruction transmitted by the communication device is received, in an embodiment of the present disclosure, the corresponding latest parking strategy may be further determined based on the current location and/or the current environment of the vehicle.

For example, in the embodiment of the present disclosure, environment information collected by at least one environment sensor of the vehicle may further be used to obtain the current environment of the vehicle, such as a signal of a road surface state where the vehicle is located (such as a high-adhesion road surface, a low-adhesion road surface, or a split road surface), or a signal of an environment where the vehicle is located (such as an extreme-cold environment, a high-temperature environment, or a high-humidity environment), to correct the parking strategy. For example, a parking clamping force on the low-adhesion road surface is greater than that on the split road surface, which is in turn greater than that on the high-adhesion road surface. A parking clamping force in a high-temperature zone is greater than that in a high-humidity zone, which is in turn greater than that in an extreme-cold zone. In this way, a state of the vehicle in the current environment is determined based on different temperatures. For example, when an air temperature is too high, air pressure inside the wheel becomes too high, easily causing a tire burst. The latest parking strategy applicable to the current environment is determined.

In actual implementation, the parking force and parking response time of the vehicle may be further determined based on a braking process of the vehicle before parking in the embodiment of the present disclosure.

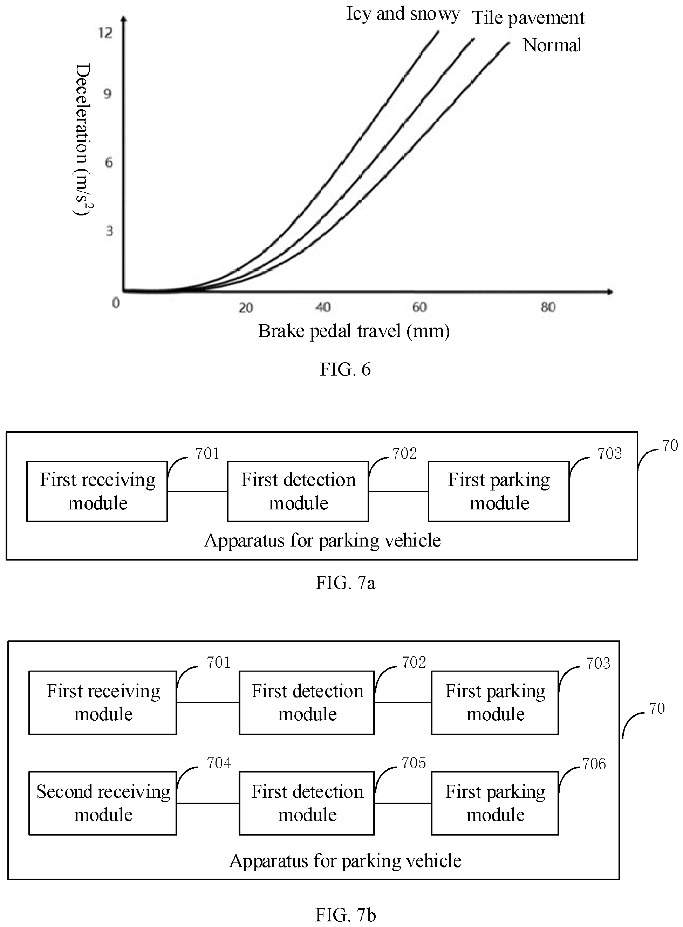

Taking a road surface state signal as an example, as shown in FIG. 6, which is a schematic diagram of a correspondence between deceleration and pedal travel when the state signal indicates the low-adhesion road surface (like an icy road surface, a snow-covered road surface, or a tile pavement road surface). For the low-adhesion road surface, a corresponding adjustment of the parking strategy may be a faster deceleration increase and shorter braking pedal travel. That is, the parking mechanism needs shorter parking response time and a faster corresponding speed, to obtain the latest parking strategy, enabling the vehicle to complete the parking action after braking on the low-adhesion road surface and preventing the vehicle from sliding.

In addition, when the vehicle is in a parking state but slides due to an external impact, if a surrounding environment is different from that at the time of vehicle parking, such as water accumulation, icing, or gravel occurring on the ground, it is difficult to ensure stable parking of the vehicle when the vehicle still controls the wheel with the parking force set at the time of parking. At this time, in an embodiment of the present disclosure, a control parameter of the latest parking strategy may be updated based on the environment information, thereby adjusting the parking force of the vehicle to ensure that the vehicle can park smoothly.

In the embodiment of the present disclosure, the latest parking strategy may be compared with a current parking strategy of the vehicle. Moreover, when the current parking strategy is not the latest parking strategy, the update prompt is provided to the user or transmitted to the predetermined terminal, such as a mobile terminal associated with the vehicle or an automobile enterprise terminal, to recommend the latest parking strategy to the user, thereby enabling the parking strategy to always satisfy the current requirement of the vehicle.

At step S402, it is detected whether the vehicle satisfies a first predetermined upgrade condition.

As a possible implementation, it may be detected whether the vehicle satisfies the first predetermined upgrade condition in an embodiment of the present disclosure. The first predetermined upgrade condition may include determining whether the current vehicle is in the driving state, for example, determining whether the vehicle is in a coasting state/driving state/parking state through a vehicle speed signal, a drive motor torque signal, or a drive motor rotational speed signal; determining whether a channel occupation state of the current vehicle satisfies an upgrade requirement, for example, determining a channel state by determining use states of some network software such as music, GPS, or Over-the-Air Technology (OTA); determining whether current internal communication of the vehicle is normal, for example, determining whether a Telematics BOX (T-BOX) operates normally without a fault, and determining whether communication of a Controller Area Network (CAN) is normal by determining whether a parking state bit signal in the CAN is normal, such as determining whether a caliper motor angle signal in the parking mechanism is normal; determining whether a current parking mechanism is faulty, such as determining whether caliper hardware or a transmission structure is faulty, and determining whether the parking mechanism is faulty by determining whether a state of the parking mechanism of each wheel can normally complete the parking action, thereby determining whether the vehicle can perform the parking strategy update based on the first predetermined upgrade condition.

At step S403, in response to detecting that the vehicle satisfies the first predetermined upgrade condition, a parking strategy of a present parking chip to which the method is applied is updated based on the first data packet, and the first data packet is transmitted to another one of the first parking chip and the second parking chip, to control a corresponding parking device among the firs parking device and the second parking device to perform parking based on the updated parking strategy.

In actual implementation, in the embodiment of the present disclosure, in response to detecting that the vehicle satisfies the first predetermined upgrade condition, the present parking chip may update the parking strategy of the present parking chip based on the first data packet according to the upgrade instruction from the communication device, and forward the first data packet to the other one of the first parking chip and the second parking chip, to implement parking strategy update of all the parking chips of the vehicle.

When the present parking chip fails to receive the upgrade instruction from the communication device, the other parking chip may receive the upgrade instruction and forward the upgrade instruction to the present parking chip. When both the parking chips cannot receive the upgrade instruction of the communication device, it can be determined that the vehicle does not satisfy the first predetermined upgrade condition. For example, in an embodiment of the present disclosure, a feedback signal may be generated based on an upgrade instruction reception state of the present parking chip. In this way, when the present parking chip fails to receive the upgrade instruction of the communication device, the feedback signal indicating failure to receive the upgrade instruction is fed back. At this time, the communication device may communicate with the other parking chip, and the upgrade instruction is received by the other parking chip.

Optionally, in an embodiment of the present disclosure, the method further includes, prior to the updating the parking strategy of the present parking chip based on the first data packet: obtaining an update mode predetermined by a user; in response to the update mode being an automatic update mode, updating the parking strategy of the present parking chip based on the first data packet; and in response to the update mode being a manual confirmation update mode, generating an update request and pushing the update request to the user.

In actual implementation, the update mode may be predetermined by the user. For example, the update mode is set by the user through a vehicle center console or the mobile terminal associated with the vehicle. The update mode may include an automatic update mode, a manual update mode, an automatic update mode in a fixed time period, and the like.

In the embodiment of the present disclosure, the parking strategy of the present parking chip may be updated based on the first data packet according to the update mode.

When the update mode is the automatic update mode, in the embodiment of the present disclosure, automatic update may be performed without querying the user.

When the update mode is the manual update mode, in the embodiment of the present disclosure, an inquiry prompt may be generated and transmitted to the user, such as to the center console or the mobile terminal.

When the update mode is the automatic update mode in a fixed time period, in the embodiment of the present disclosure, a corresponding determination may be performed based on a current vehicle state. For example, when the vehicle is currently in a non-driving state and not in an automatic update time period, an inquiry prompt may be transmitted to the user, or the system may wait until the automatic update time period to perform update automatically. When the vehicle is currently in the driving state, the updated parking strategy is required at a target parking location of the vehicle, and the vehicle is outside the automatic update time period, the inquiry prompt may be transmitted to the user in the embodiment of the present disclosure.

Through the above technical solution, the update can be performed based on the update mode predetermined by the user, so that the update time and the update mode better satisfy a user requirement.

Optionally, in an embodiment of the present disclosure, the updating the parking strategy of the present parking chip based on the first data packet includes: obtaining an actual parking type of the vehicle; determining an upgrade mode matching the actual parking type; and upgrading the parking strategy based on the first data packet according to the upgrade mode.

It can be understood that different parking types affect the actual parking mode of the vehicle, so corresponding upgrade modes are also different. In the embodiment of the present disclosure, the actual parking type of the vehicle may be obtained, and then the upgrade mode matching the actual parking type may be determined.

For example, there is a type where the parking mechanism corresponding to the present parking chip is connected to the two front wheels of the vehicle, and the parking mechanism corresponding to the other parking chip is connected to the two rear wheels of the vehicle. At this time, the corresponding upgrade mode may be parallel upgrade when the vehicle is in a stationary state. In this case, there is no risk of the vehicle being unable to park due to failed upgrade. When the vehicle is in the driving state, i.e., the vehicle speed is greater than 0 kph, priority is given to upgrading the parking chip connected to the two rear wheels. If the vehicle upgrade fails, the parking mechanism connected to the two front wheels serves as a primary parking source.

For example, there is a type where the parking mechanism corresponding to the present parking chip is connected to the two left wheels of the vehicle, and the parking mechanism corresponding to the other parking chip is connected to the two right wheels of the vehicle. At this time, the corresponding upgrade mode may be the parallel upgrade when the vehicle is in the stationary state (i.e., the vehicle speed is equal to 0 km/h). In this case, there is no risk of the vehicle being unable to park due to the failed upgrade. When the vehicle is in the driving state, i.e., the vehicle speed is greater than 0 km/h and smaller than 10 km/h, priority is given to upgrading any one of the two parking chips. When the vehicle upgrade fails, another two wheels may serve as the primary parking source. When the vehicle is in the driving state, i.e., the vehicle speed is greater than 10 km/h, the upgrade is not possible. The upgrade may only be performed only after the vehicle comes to a complete stop.

For example, there is a type where the parking mechanism corresponding to the present parking chip is connected to the left front wheel and the right rear wheel of the vehicle, and the parking mechanism corresponding to the other parking chip is connected to the right front wheel and the left rear wheel of the vehicle. At this time, the corresponding upgrade mode may be the parallel upgrade when the vehicle is in the stationary state (i.e., the vehicle speed is equal to 0 km/h). In this case, there is no risk of the vehicle being unable to park due to the failed upgrade. When the vehicle is in the driving state, i.e., the vehicle speed is greater than 0 km/h, priority is given to upgrading the present parking chip. When the vehicle upgrade fails, another two wheels may serve as the primary parking source. After the upgrade is completed or during the upgrade process, the parking chips of the embodiment of the present disclosure may monitor each other to determine whether the upgrade is successful or a fault occurs during the upgrade.

Through the above technical solution, the upgrade mode matching the actual parking type of the vehicle can be determined, solving an impact of an in-vehicle parking structure on the parking strategy upgrade.

Optionally, in an embodiment of the present disclosure, the method further includes, subsequent to the updating the parking strategy of the present parking chip based on the first data packet: determining whether the parking strategy is successfully updated; and in response to determining that the parking strategy is not successfully updated, controlling the vehicle to provide a manual update prompt, or re-updating the parking strategy of the present parking chip based on the first data packet at a predetermined time interval, until the update succeeds.

In the embodiment of the present disclosure, it can be determined whether the update is successful after the parking strategy update is performed, and the parking strategy is executed based on a driving intention after the update is successful. When the update fails, in the embodiment of the present disclosure, the vehicle may be controlled to provide the manual update prompt. For example, the user may be prompted to perform manual update by transmitting the update prompt to a user mobile terminal associated with the vehicle, flashing an instrument panel indicator light, prompting through a center console screen or playing a voice prompt through a speaker when the vehicle is in a power-on state, preventing the user forming failing to use the optimal parking strategy during parking due to the update failure.

Reasons for the failed update may include a network fault, the channel occupation state failing to meet the upgrade requirement, an internal signal transmission fault, driver's refusal to update, and the like.

In the embodiment of the present disclosure, update may also be re-performed at the predetermined time interval when the update fails, until the update is successful, avoiding the update failure caused by a problem such as a signal interference, channel occupation, or resource invocation.

Through the above technical solution, it can be determined whether the parking strategy is successfully updated, and the user can be notified in a timely manner for response processing, avoiding an impact of the update failure on normal parking of the vehicle.

Optionally, in an embodiment of the present disclosure, the method further includes: receiving a second upgrade instruction transmitted by a server, where the second upgrade instruction has a second data packet; detecting whether the vehicle satisfies a second predetermined upgrade condition; and in response to detecting that the vehicle satisfies the second predetermined upgrade condition, updating the parking strategy of the present parking chip based on the second data packet, and transmitting the second data packet to the other parking chip.

As a possible implementation, the present parking chip in the embodiment of the present disclosure may also directly receive the second upgrade instruction having the second data packet transmitted by the server, thereby preventing the parking strategy update from failing in the event of a communication device failure or a communication failure between the communication device and any of the parking chips.

Optionally, in an embodiment of the present disclosure, the detecting whether the vehicle satisfies the second predetermined upgrade condition includes: determining whether the vehicle is in a driving state; determining whether a channel occupation state of the vehicle satisfies an upgrade requirement; determining whether internal communication of the vehicle is normal; and determining whether a parking structure of the vehicle is faulty.

In the embodiment of the present disclosure, it may be detected whether the vehicle satisfies the second predetermined upgrade condition after the second upgrade instruction is received. The second predetermined upgrade condition may include determining whether the current vehicle is in the driving state, determining whether the channel occupation state of the current vehicle satisfies the upgrade requirement, determining whether the current internal communication of the vehicle is normal, determining whether a current parking structure is faulty, and the like, thereby determining whether the vehicle can perform the parking strategy update based on the second predetermined upgrade condition.

In the embodiment of the present disclosure, in response to detecting that the vehicle satisfies the second predetermined upgrade condition, the present parking chip may update the parking strategy of the present parking chip based on the second data packet according to the upgrade instruction from the communication device, and forward the second data packet to the other parking chip, to implement the parking strategy update of all the parking chips of the vehicle.

When the any one of the parking chips fails to receive the upgrade instruction from the communication device, the other parking chip may receive the upgrade instruction and forward it to the one parking chip. When both parking chips cannot receive the upgrade instruction of the communication device, it can be determined that the vehicle does not satisfy the second predetermined upgrade condition.

Through the above technical solution, besides receiving the upgrade instruction transmitted by the communication device, an upgrade instruction transmitted by the server can also be received, thereby avoiding an update failure caused by a fault of the communication device and diversifying sources of the update data.

In summary, the method of the present disclosure may be applied to a redundant control parking system. The parking strategy of any parking chip can be updated when the vehicle satisfies the upgrade condition, to prevent erroneous update from affecting a normal parking function of the vehicle. Moreover, the update data is transmitted to the other parking chip through forwarding between the parking chips, without requiring a complicated wiring structure. In this way, the parking performance of the vehicle is enhanced, and the driving safety and the fuel economy are improved.

FIGS. 7a to 7j are schematic structural diagrams of an apparatus for parking a vehicle according to an embodiment of the present disclosure.

Exemplarily, as shown in FIG. 7a, the apparatus 70 for parking the vehicle is applied to any one of the first parking chip 301 and the second parking chip 401, and includes a receiving module 701, a detection module 702, and a parking module 703.

In an embodiment of the present disclosure, the first receiving module 701 is configured to receive a first upgrade instruction transmitted by the communication device. The first upgrade instruction has a first data packet.

The first detection module 702 is configured to detect whether the vehicle satisfies a first predetermined upgrade condition.

The first parking module 703 is configured to, in response to detecting that the vehicle satisfies the first predetermined upgrade condition, update a parking strategy of a present parking chip to which the method is applied based on the first data packet, and transmit the first data packet to another one of the first parking chip and the second parking chip, to control a corresponding parking device among the first parking device and the second parking device to perform parking based on the updated parking strategy.

Optionally, as shown in FIG. 7b, in an embodiment of the present disclosure, the apparatus 70 for parking the vehicle further includes: a second receiving module 704, a second detection module 705, and a second parking module 706.

The second receiving module 704 is configured to receive a second upgrade instruction transmitted by a server. The second upgrade instruction has a second data packet.

The second detection module 705 is configured to detect whether the vehicle satisfies a second predetermined upgrade condition.

The second parking module 706 is configured to, in response to detecting that the vehicle satisfies the second predetermined upgrade condition, update the parking strategy of the present parking chip based on the second data packet, and transmit the second data packet to the other one of the first parking chip and the second parking chip.

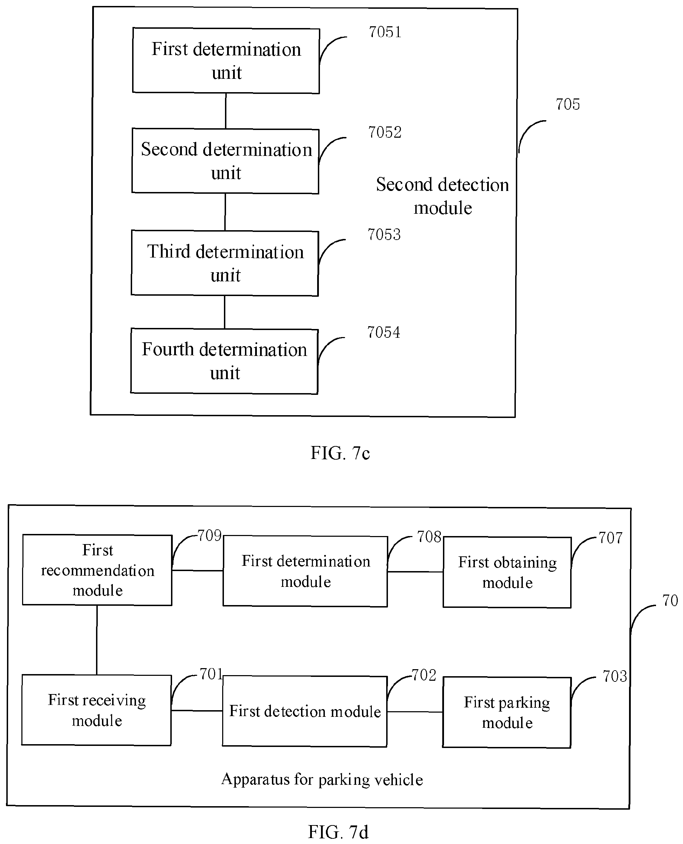

Optionally, as shown in FIG. 7c, in an embodiment of the present disclosure, the second detection module 705 includes: a first determination unit 7051, a second determination unit 7052, a third determination unit 7053, and a fourth determination unit 7054.

The first determination unit 7051 is configured to determine whether the vehicle is in a driving state.

The second determination unit 7052 is configured to determine whether a channel occupation state of the vehicle satisfies an upgrade requirement.

The third determination unit 7053 is configured to determine whether internal communication of the vehicle is normal.

The fourth determination unit 7054 is configured to determine whether a parking structure of the vehicle is faulty.

Optionally, as shown in FIG. 7d, in an embodiment of the present disclosure, the apparatus 70 for parking the vehicle further includes: a first obtaining module 707, a first determination module 708, and a first recommendation module 709.

The first obtaining module 707 is configured to obtain a current location and/or a current environment of the vehicle.

The first determination module 708 is configured to determine whether a latest parking strategy corresponding to the current location and/or the current environment is the parking strategy.

The first recommendation module 709 is configured to, in response to determining that the latest parking strategy corresponding to the current location and/or the current environment is not the parking strategy, provide an update prompt to a user or transmit the update prompt to a predetermined terminal, to recommend the latest parking strategy to the user.

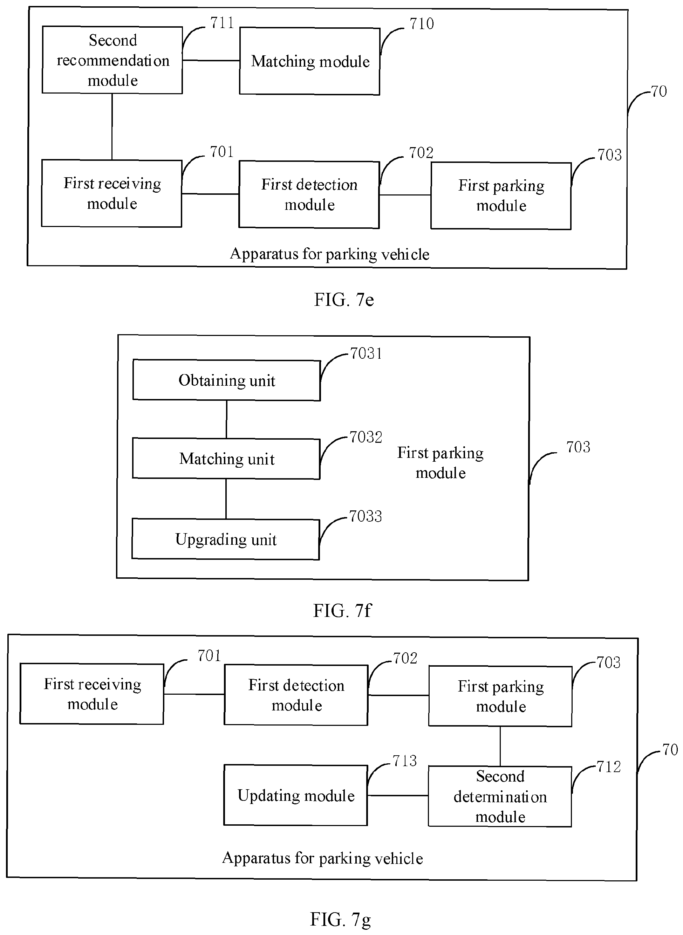

Optionally, as shown in FIG. 7e, in an embodiment of the present disclosure, the apparatus 70 for parking the vehicle further includes: a matching module 710 and a second recommendation module 711.

The matching module 710 is configured to identify a driving style of a current user, and determine a parking strategy matching the driving style.

The second recommendation module 711 is configured to recommend a corresponding upgrade package based on the parking strategy matching the driving style and the parking strategy to the current user. The first upgrade instruction is obtained from the upgrade package.

Optionally, in an embodiment of the present disclosure, the first upgrade instruction includes at least one of an upgrade mode, upgrade time, or an upgrade determination condition.

Optionally, in an embodiment of the present disclosure, the upgrade mode includes a staged upgrade mode generated based on the first data packet and an idle time period of the vehicle.

Optionally, as shown in FIG. 7f, in an embodiment of the present disclosure, the first parking module 703 includes: an obtaining unit 7031, a matching unit 7032, and an upgrade unit 7033.

The obtaining unit 7031 is configured to obtain an actual parking type of the vehicle.

The matching unit 7032 is configured to determine an upgrade mode matching the actual parking type.

The upgrade unit 7033 is configured to upgrade the parking strategy based on the first data packet according to the upgrade mode.

Optionally, as shown in FIG. 7g, in an embodiment of the present disclosure, the apparatus 70 for parking the vehicle further includes: a second determination module 712 and an update module 713.

The second determination module 712 is configured to determine whether the parking strategy is successfully updated.

The update module 713 is configured to, in response to determining that the parking strategy is not successfully updated, control the vehicle to provide a manual update prompt, or re-update the parking strategy of the present parking chip based on the first data packet at a predetermined time interval, until the parking strategy is successfully updated.

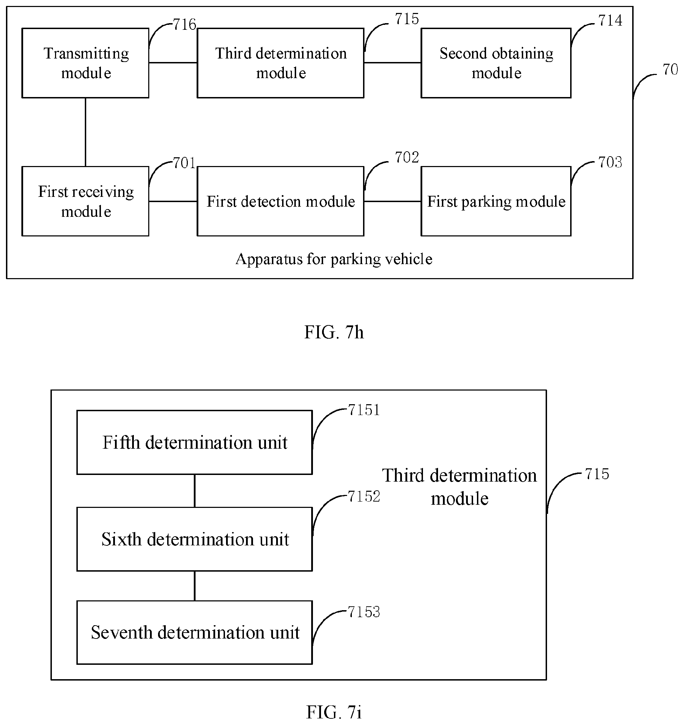

Optionally, as shown in FIG. 7h, in an embodiment of the present disclosure, the apparatus 70 for parking the vehicle further includes: a second obtaining module 714, a third determination module 715, and a transmitting module 716.

The second obtaining module 714 is configured to obtain a destination of the vehicle based on navigation information of the vehicle.

The third determination module 715 is configured to determine whether the parking strategy satisfies a predetermined to-be-upgraded condition based on a parking strategy corresponding to the destination.

The transmitting module 716 is configured to, in response to determining that the parking strategy satisfies the predetermined to-be-upgraded condition, transmit an upgrade request to a server.

Optionally, as shown in FIG. 7i, in an embodiment of the present disclosure, the third determination module 715 includes: a fifth determination unit 7151, a sixth determination unit 7152, and a seventh determination unit 7153.

The fifth determination unit 7151 is configured to determine whether the vehicle performs parking during travel to the destination.

The sixth determination unit 7152 is configured to determine whether parking strategy update conflicts with a driving state of the vehicle.

The seventh determination unit 7153 is configured to determine whether a parking strategy update process affects other functions of the vehicle.

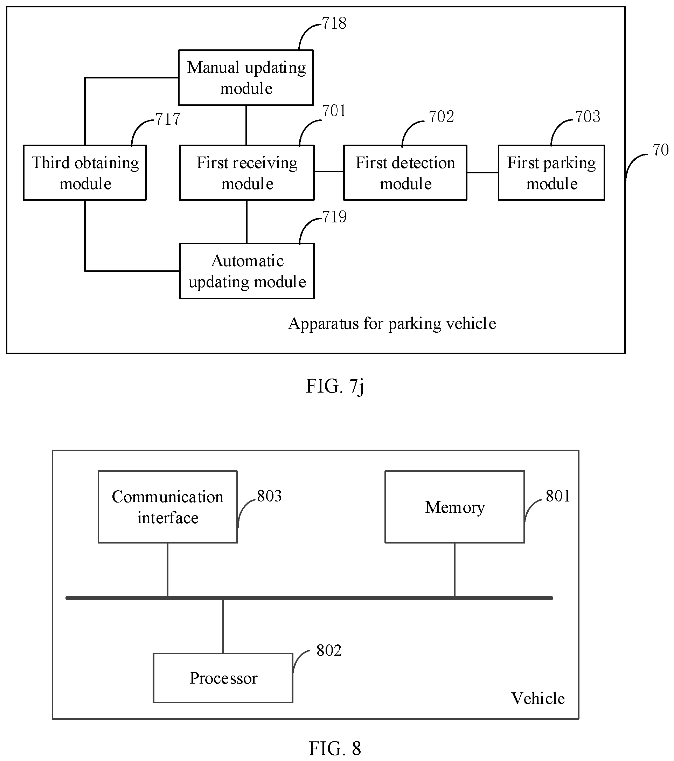

Optionally, as shown in FIG. 7j, in an embodiment of the present disclosure, the apparatus 70 for parking the vehicle further includes: a third obtaining module 717, an automatic update module 718, and a manual update module 719.

The third obtaining module 717 is configured to obtain an update mode predetermined by a user.

The automatic update module 718 is configured to, in response to the update mode being an automatic update mode, update the parking strategy of the present parking chip based on the first data packet.

The manual update module 719 is configured to, in response to the update mode being a manual confirmation update mode, generate an update request and push the update request to a user.

In summary, the method may be applied to the redundant control parking system, and is capable of updating the parking strategy of the present parking chip when the vehicle satisfies the upgrade condition, to prevent the erroneous update from affecting the normal parking function of the vehicle. Moreover, the update data is transmitted to the other parking chip through forwarding between the parking chips, without requiring the complicated wiring structure. In this way, the parking performance of the vehicle is enhanced, and the driving safety and the fuel economy are improved.

FIG. 8 is a schematic structural diagram of a vehicle according to an embodiment of the present disclosure. The vehicle may include: a memory 801; a processor 802; and a computer program stored in the memory 801 and executable on the processor 802.

The processor 802 implements the method for parking the vehicle according to the above embodiments when executing the program.

The vehicle further includes: a communication interface 803 configured for communication between the memory 801 and the processor 802.

The memory 801 is configured to store a computer program executable on the processor 802.

The memory 801 may include a high-speed Random Access Memory (RAM), and may also include a non-volatile memory, such as at least one disk memory.

When the memory 801, the processor 802, and the communication interface 803 are implemented independently, the communication interface 803, the memory 801, and the processor 802 may be interconnected and communicate with each other via a bus. The bus may be an Industry Standard Architecture (ISA) bus, a Peripheral Component (PCI) bus, or an Extended Industry Standard Architecture (EISA) bus. The buses may be divided into an address bus, a data bus, a control bus, etc. For the convenience of description, only one thick line is used in FIG. 8 but it does not mean that there is only one bus or one type of bus.

Optionally, in a specific implementation, when the memory 801, the processor 802, and the communication interface 803 are integrated on a single chip for an implementation, the memory 801, the processor 802, and the communication interface 803 may communicate with each other through an internal interface.

The processor 802 may be a Central Processing Unit (CPU), or an Application Specific Integrated Circuit (ASIC), or one or more integrated circuits configured to implement an embodiment of the present disclosure.

A computer-readable storage medium is further provided according to an embodiment. The computer-readable storage medium has a computer program stored thereon. The computer program, when executed by a processor, implements the method for parking the vehicle as described above.

In the description of this specification, descriptions with reference to the terms "an embodiment", "some embodiments", "an example", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "N" means at least two, such as two, three, etc., unless otherwise specifically defined.

Any process or method described in a flowchart or described herein in other ways may be understood to include one or N modules, segments, or portions of codes of executable instructions for achieving specific logical functions or steps in the process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

The logic and/or step described in other manners herein or shown in the flowchart, for example, a particular sequence table of executable instructions for realizing the logical function, may be specifically realized in any computer readable medium to be used by the instruction execution system, device or equipment (such as the system based on computers, the system including processors or other systems capable of obtaining the instructions from the instruction execution system, device and equipment and executing the instructions), or to be used in combination with the instruction execution system, device and equipment. As to the specification, "the computer readable medium" may be any device adaptive for including, storing, communicating, propagating, or transferring programs to be used by or in combination with the instruction execution system, device or equipment. More specific examples of the computer readable medium include but are not limited to: an electronic connection (an electronic device) with one or N wires, a portable computer disk case (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the present disclosure may be realized by the hardware, software, firmware or their combination. In the above embodiments, N steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above method of the embodiments of the present disclosure may be achieved by instructing the related hardware with programs. The programs may be stored in a computer-readable storage medium, and the programs include one or a combination of the steps in the method embodiments of the present disclosure when run on a computer.

In addition, each function cell of the embodiments of the present disclosure may be integrated in a processing module, or these cells may exist separately physically, or two or more cells may be integrated in a processing module. The integrated module may be realized in a form of hardware or in a form of software function modules. When the integrated module is realized in the form of a software function module and is sold or used as a standalone product, the integrated module may be stored in a computer-readable storage medium.

The storage medium mentioned above may be read-only memories, magnetic disks, CD, etc. Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from the scope of the present disclosure.

## Claims

1. A method for parking a vehicle, wherein the vehicle comprises:
a first parking device and a second parking device that are respectively disposed corresponding to front wheels and rear wheels; or a first parking device disposed corresponding to one of the front wheels and one of the rear wheels of the vehicle, and a second parking device disposed corresponding to another one of the front wheels and another one of the rear wheels of the vehicle;
a first control assembly configured to drive the first parking device to operate and comprising a first parking chip;
a second control assembly configured to drive the second parking device to operate and comprising a second parking chip, wherein the first parking chip and the second parking chip communicate with each other; and
a communication device in communication with the first control assembly or the second control assembly; and
wherein the method is applied to any one of the first parking chip and the second parking chip, and comprises:
receiving a first upgrade instruction transmitted by the communication device, wherein the first upgrade instruction has a first data packet;
detecting whether the vehicle satisfies a first predetermined upgrade condition; and
in response to detecting that the vehicle satisfies the first predetermined upgrade condition, updating a parking strategy of a present parking chip to which the method is applied based on the first data packet, and transmitting the first data packet to another one of the first parking chip and the second parking chip, to control a corresponding parking device among the first parking device and the second parking device to perform parking based on the updated parking strategy.

2. The method according to claim 1, further comprising:
receiving a second upgrade instruction transmitted by a server, wherein the second upgrade instruction has a second data packet;
detecting whether the vehicle satisfies a second predetermined upgrade condition; and
in response to detecting that the vehicle satisfies the second predetermined upgrade condition, updating the parking strategy of the present parking chip based on the second data packet, and transmitting the second data packet to the other one of the first parking chip and the second parking chip.

3. The method according to claim 2, wherein said detecting whether the vehicle satisfies the second predetermined upgrade condition comprises:
determining whether the vehicle is in a driving state;
determining whether a channel occupation state of the vehicle satisfies an upgrade requirement;
determining whether internal communication of the vehicle is normal; and
determining whether a parking structure of the vehicle is faulty.

4. The method according to claim 1, further comprising, prior to said receiving the first upgrade instruction transmitted by the communication device:
obtaining a current location and/or a current environment of the vehicle;
determining whether a latest parking strategy corresponding to the current location and/or the current environment is the parking strategy; and
in response to determining that the latest parking strategy corresponding to the current location and/or the current environment is not the parking strategy, providing an update prompt to a user or transmitting the update prompt to a predetermined terminal, to recommend the latest parking strategy to the user.

5. The method according to claim 1, further comprising, prior to said receiving the first upgrade instruction transmitted by the communication device:
identifying a driving style of a current user, and determining a parking strategy matching the driving style; and
recommending a corresponding upgrade package based on the parking strategy matching the driving style and the parking strategy to the current user,
wherein the first upgrade instruction is obtained from the upgrade package.

6. The method according to any one of claims 1 to 5, wherein the first upgrade instruction comprises at least one of an upgrade mode, upgrade time, or an upgrade determination condition.

7. The method according to any one of claims 1 to 6, wherein the upgrade mode comprises a staged upgrade mode generated based on the first data packet and an idle time period of the vehicle.

8. The method according to claim 1, wherein said updating the parking strategy of the present parking chip to which the method is applied based on the first data packet comprises:
obtaining an actual parking type of the vehicle;
determining an upgrade mode matching the actual parking type; and
upgrading the parking strategy based on the first data packet according to the upgrade mode.

9. The method according to claim 1, further comprising, subsequent to said updating the parking strategy of the present parking chip to which the method is applied based on the first data packet:
determining whether the parking strategy is successfully updated; and
in response to determining that the parking strategy is not successfully updated,
controlling the vehicle to provide a manual update prompt, or
re-updating the parking strategy of the present parking chip based on the first data packet at a predetermined time interval, until the parking strategy is successfully updated.

10. The method according to claim 1, further comprising, prior to said receiving the first upgrade instruction transmitted by the communication device:
obtaining a destination of the vehicle based on navigation information of the vehicle;
determining whether the parking strategy satisfies a predetermined to-be-upgraded condition based on a parking strategy corresponding to the destination; and
in response to determining that the parking strategy satisfies the predetermined to-be-upgraded condition, transmitting an upgrade request to a server.

11. The method according to claim 10, wherein said determining whether the parking strategy satisfies the predetermined to-be-upgraded condition based on a parking strategy corresponding to the destination comprises:
determining whether the vehicle performs parking during travel to the destination;
determining whether parking strategy update conflicts with a driving state of the vehicle; and
determining whether a parking strategy update process affects other functions of the vehicle.

12. The method according to claim 1, further comprising, prior to said updating the parking strategy of the present parking chip to which the method is applied based on the first data packet:
obtaining an update mode predetermined by a user;
in response to the update mode being an automatic update mode, updating the parking strategy of the present parking chip based on the first data packet; and
in response to the update mode being a manual confirmation update mode, generating an update request and pushing the update request to the user.

13. A vehicle, comprising:
a memory;
a processor; and
a computer program stored in the memory and executable on the processor, wherein the processor executes the program to implement the method for parking the vehicle according to any one of claims 1 to 12.

14. A computer-readable storage medium, storing a computer program, wherein the computer program, when executed, implements the method for parking the vehicle according to any one of claims 1 to 12.
